# EUROPEAN PATENT SPECIFICATION

(11) **EP 4 198 501 B1**
(45) Date of publication and mention of the grant of the patent: **29.01.2025**
(21) Application number: 22212502.3
(22) Date of filing: 09.12.2022
(51) Int. Cl.: G01N 21/89, B65B 57/04, B65B 57/00, B65B 5/06, B65B 57/08, G05B 19/418

(54) **BAG PROCESSING APPARATUS**
BEUTELVERARBEITUNGSVORRICHTUNG
APPAREIL DE TRAITEMENT DE SACS

(30) Priority: 16.12.2021 JP 2021204573
(43) Date of publication of application: 21.06.2023
(73) Proprietor: Pacraft Co., Ltd., Tokyo 108-0014 (JP)
(72) Inventor: Nagai, Hiroaki, Iwakuni-shi, Yamaguchi-ken (JP); Sakamoto, Takuya, Iwakuni-shi, Yamaguchi-ken (JP)
(74) Representative: Grünecker Patent- und Rechtsanwälte PartG mbB

(56) References cited:
- EP-A1- 3 588 065
- EP-A1- 3 919 394
- CN-A- 107 014 821
- JP-A- 2000 088 781
- US-A- 5 717 456
- US-A1- 2010 112 916

## Description

### TECHNICAL FIELD

The present disclosure relates to a bag processing apparatus.

### BACKGROUND ART

In the bag-filling package machine disclosed in Japanese patent application publication No. 2001-106210, defects detected in a packaging step are counted and then it is determined that an abnormality occurs when the number of defect counts of the same type reaches a preset value. Another bag processing apparatus is disclosed in EP 3 588 065 A1.

### SUMMARY OF INVENTION

By conducting the abnormality determination based on the sequence of processing defects (such as a bag feeding defect and a bag opening processing defect) in the bag-filling package machine of Japanese patent application publication No. 2001-106210, it is advantageous to the determination of abnormalities caused by deterioration in components without being misled by accidental defects (such as defects of a bag mouth not opening unexpectedly due to static electricity or the like).

However, the abnormality determination disclosed in Japanese patent application publication No. 2001-106210 is within a matter of speculation. In other words, the abnormality determination method of Japanese patent application publication No. 2001-106210 can infer the occurrence of defects caused by aging deterioration in components based on the sequence of processing defects, but does not directly determine the cause of defect occurrence.

Direct check of the causes of the occurrence of such defects is typically done by human visual inspection, but there is a limit to the speed of apparatus operation that can be visually observed by humans. Therefore, when conducting the check of the causes of the occurrence of defects, it is necessary to reduce the operating speed of an apparatus to a visually perceptible level. Further, even if an apparatus is operating at a speed that can be visually observed, it is not easy to identify the causes of the occurrence of defects by observing the apparatus which is operating at high speed. Therefore, in some cases, when visually checking for defect generation causes, the operating speed of an apparatus is adjusted to a lower speed than that during normal operation.

However, the condition of an apparatus which is operating at a low speed in order to check for the causes of the occurrence of defects does not necessarily match the condition of the apparatus which is operating at a high speed during normal operation. For example, an air cylinder normally operates at a predetermined speed according to its design, and therefore, it is not easy to change the operating speed in itself, and changing the performance of an air cylinder for changing the operating speed might cause a situation where it exhibits behavior completely different from the normal operating behavior. As a result, new defects such as misalignment in the interlocking state between the air cylinder and other devices such as a cam mechanism may occur, making it even more difficult to identify the true cause of the occurrence of the original defects.

In addition, when a defect occurs that causes an apparatus to stop working, it might take a great deal of effort and time to identify the cause of the occurrence of the defect after the defect occurs because the apparatus does not operate after the defect occurs.

The present disclosure has been made in view of the above-mentioned circumstances and provides a technique advantageous to identifying a cause of the occurrence of a defect.

An aspect of the present invention is directed to a bag processing apparatus comprising: a defect detection unit which detects occurrence of a defect in processing of a bag; and an imaging unit which is separately provided from the defect detection unit and takes images of a location creating a cause of occurrence of the defect to acquires video data, the vide data being stored in association with the occurrence of the defect.

The video data may be stored together with time information of image-taking in such a manner that the video data is associated with the occurrence of the defect by the time information.

The bag processing apparatus may comprise an image analysis unit which analyzes the video data in a time range related to the occurrence of the defect, to identify the cause of the occurrence of the defect.

The video data may have a frame rate of 50 fps or higher.

A plurality of defect detection units may be provided, a plurality of imaging units may be provided, and the video data of a location creating a cause of the occurrence of the defect detected by each of the plurality of defect detection units may be acquired by one or more corresponding imaging units.

The bag processing apparatus may comprise a storage unit in which the vide data is stored in association with the occurrence of the defect, wherein the video data related to a bag in which the defect has occurred in the processing and the video data related to a bag of which the processing has been performed without occurrence of the defect may be stored in the storage unit.

The image analysis unit may compare the video data related to a bag in which the defect has occurred in the processing, with the video data related to a bag of which the processing has been performed without occurrence of the defect, to identify the cause of the occurrence of the defect.

The bag processing apparatus may comprise a notification unit which performs notification of the cause of the occurrence of the defect identified as a result of analysis of the video data.

According to the present disclosure, it is advantageous to identifying a causes of the occurrence of a defect.

### BRIEF DESCRIPTION OF DRAWINGS

Fig. 1 is a perspective view showing a schematic configuration of one example of a packaging machine (i.e., a bag processing apparatus);
Fig. 2 is a block diagram showing one example of the functional configuration of a packaging machine;
Fig. 3 is a block diagram showing another example of the functional configuration of a packaging machine;
Fig. 4 is a block diagram showing another example of the functional configuration of a packaging machine;
Fig. 5 is a flowchart showing one example of the processing flow in a packaging machine;
Fig. 6 is a flowchart showing one example of the processing flow for identifying the cause of the occurrence of a defect;
Fig. 7 is a diagram showing an example of the relation between a defect occurrence time and a defect-related time range;
Fig. 8 is a flowchart showing another example of the processing flow in a packaging machine; and
Fig. 9 is a flowchart showing another example of the processing flow in a packaging machine.

### DESCRIPTION OF EMBODIMENTS

Below, an embodiment of the present disclosure is described with reference to drawings.

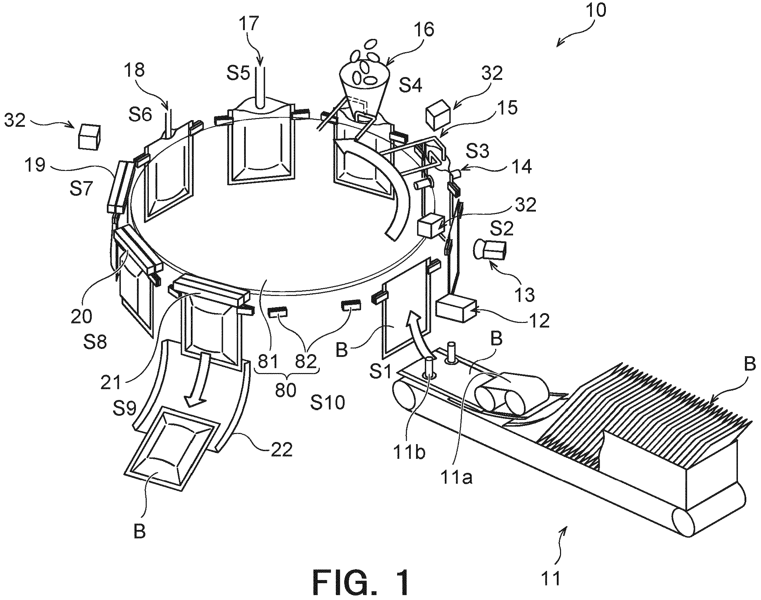

Fig. 1 is a schematic view showing an example of a packaging machine (i.e., a bag processing apparatus) 10.

The packaging machine 10 comprises a conveyance device 80 that conveys bags B. Bags B conveyed by the conveyance device 80 go from a first station S1 to a ninth station 9 in a sequential manner. The conveyance device 80 shown in Fig. 1 includes: a disk-shaped rotary table 81; and a plurality of gripper pairs (i.e., ten (10) gripper pairs) attached to the rotary table 81.

The rotary table 81 has a circular planar shape and rotates intermittently about its central axis which extends in the height direction and serves as the rotational axis. The ten gripper pairs 82 are attached to the outer circumference part of the rotary table 81 at equal intervals in the direction of rotation, move intermittently along a circular path according to the intermittent rotation of the rotary table 81, and stop intermittently at the first station S1 to the tenth station S10 in a sequential manner.

Each gripper pair 82 has two grippers, and both side edge portions of a bag B are gripped by these two grippers respectively in such a manner that the bag B is held in a suspended state. In accordance with the intermittent rotation of the rotary table 81, bags B held by the respective gripper pairs 82 move intermittently along a circular path and stop intermittently at the first stations S1 to the ninth station S9 in a sequential manner. Bags B undergo various processing during their intermittent stop at each of the first stations S1 to the ninth station S9.

At the first station S1, a bag (i.e., an empty bag) B is supplied to a gripper pair 82 by a bag feeding device 11, so that the gripper pair 82 supports the supplied bag B in a suspended state (a bag supply process). The bag feeding device 11 shown in Fig. 1 includes: a feed roller 11a which feeds bags B one at a time; and feed suction cups 11b which lift a bag B fed by the feed roller 11a to pass the bag B to a gripper pair 82 waiting at the first station S1.

Further, a printing device 12 is provided in the first station S1. The printing device 12 prints various information on a bag B (in particular, on a bag side wall surface) held by a gripper pair 82 at the first station S1 (a printing process). The printing device 12 can use a laser as an example to perform the printing process on a bag B, but can employ any other printing method and may use ink (e.g., an inkjet method) to print various information on a bag B.

The printing device 12 may be located between the first station S1 and the second station S2. In this case, the printing device 12 may perform printing on a bag B while the bag B is moving along with a gripper pair 82 from the first station S1 towards the second station S2.

A print inspection device 13 is provided in the second station S2. The print inspection device 13 inspects the state of printing on a bag B which is arranged at the second station S2 together with a gripper pair 82 (a print inspection process). The print inspection device 13 is typically equipped with a camera (i.e., an imaging device) but the specific configuration of the print inspection device 13 is not limited.

A mouth opening device 14 and a mouth opening retaining device 15 are provided in the third station S3. The mouth opening device 14 comprises an opening means such as suction cups and opens the mouth portion of a bag B which is arranged together with a gripper pair 8 at the third station S3 (a mouth opening process). The mouth opening retaining device 15 moves along with a bag B from the third station S3 to the fourth station S4 while retaining the open state of the bag B, which has been opened by the mouth opening device 14.

A content feeding device 16 is provided in the fourth station S4. The content feeding device 16 comprises a content guiding means such as a hopper and feeds contents (e.g., solid contents) into a bag B which is arranged together with a gripper pair 8 at the fourth station S4 (a first content introduction process). The mouth opening retaining device 15 leaves a bag B and returns from the fourth station S4 to the third station S3 after the bag B has reached a state in which its opening state can be maintained in a stable manner, such as after the content guiding means such as a hopper has entered the inside of the bag B or after the contents have been fed into the bag B.

A content injection device 17 is provided in the fifth station S5. The content injection device 17 comprises a content guiding means such as a nozzle, and injects a content (e.g., a liquid content) into a bag B which is arranged together with a gripper pair 82 at the fifth station S5 (a second content introduction process). The content supplied to a bag B from the content injection device 17 at the fifth station S5 may be partially or completely the same as or may be completely different from the contents supplied to a bag B from the content feeding device 16 at the fourth station S4.

A steam supply device 18 is provided in the sixth station S6. The steam supply device 18 comprises a steam guiding means such as a nozzle, and injects a high-temperature steam into a bag B which is arranged together with a gripper pair 82 at the sixth station S6 (a steam injection process). This steam injection can drive air (including oxygen) out of the bag B.

A first sealing device 19 and a second sealing device 20 are provided in the seventh station S7 and the eighth station S8, respectively. The first sealing device 19 and the second sealing device 20 perform heat sealing processes while nipping the mouth portion of a bag B which is arranged together with a gripper pair 82 at the seventh station S7 and the eighth station S8 (a first sealing process and a second sealing process).

Only one of the first sealing device 19 and the second sealing device 20 may be provided as a sealing device, and a method other than the heat sealing method (e.g., an ultrasonic sealing method) may be employed as a sealing method.

A seal cooling device 21 and a release chute 22 are provided in the ninth station S9. The seal cooling device 21 nips the sealed portion of a bag B which is arranged together with a gripper pair 82 at the ninth station S9 to cool the sealed section (a cooling process), so that the sealing condition of the bag B is stabilized.

After the cooling process is performed, a bag B is released from a gripper pair 82 and the seal cooling device 21 at the ninth station S9 to fall, and then is guided by the release chute 22 to be sent to the subsequent stage (a release process). If the seal cooling device 21 is capable of holding a bag B by itself, the bag B may be released from the support of the seal cooling device 21 after being released from the support of a gripper pair 82. Alternatively, the bag B may be released from the support of a gripper pair 82 after being released from the support of the seal cooling device 21, or the bag B may be released from the support of a gripper pair 82 and the support of the seal cooling device 21 in a simultaneous manner.

The tenth station S10, at which a gripper pair 82 stops intermittently between the ninth station S9 and the first station S1, may be a vacancy station or may be a processing station in which any process takes place. For example, it is possible that bags B which are determined to have a printing defect or any other defect, are not released from the support of a gripper pair 82 at the ninth station S9 but are released from the support of the gripper pair 82 at the tenth station S10.

The packaging machine 10 shown in Fig. 1 further comprises imaging units 32 provided in the second station S2, the third station S3, and the seventh station S7, respectively. Each imaging unit 32 continuously takes images of a desired location of the packaging machine 10 and/or a bag B to acquire video data.

The imaging units 32 are devices which acquires video data to be verified in order to identify the cause of a defect of processing performed with respect to bags B. Therefore, the installation locations of the imaging units 32 are not limited to those in the example shown in Fig. 1, and such imaging units 32 can be installed at any locations where it is possible to take images of locations in which the cause of a defect of processing performed with respect to bags B may exist. For instance, an imaging unit 32 can be placed above, to the side of, or below an object to be imaged. The details of the imaging units 32 are described later.

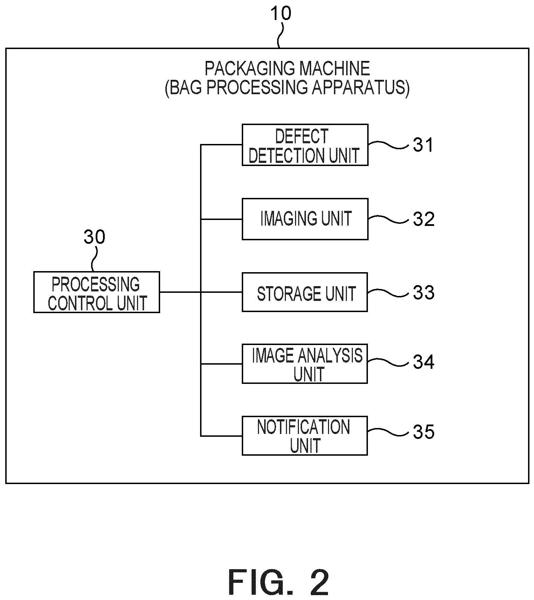

Fig. 2 is a block diagram showing an example of the functional configuration of the packaging machine 10. Each block shown in Fig. 2 is formed by one or more devices as appropriate.

The packaging machine 10 shown in Fig. 2 includes a processing control unit 30, a defect detection unit 31, an imaging unit 32, a storage unit 33, an image analysis unit 34, and a notification unit 35.

Under the control of the processing control unit 30, the defect detection unit 31 detects the occurrence of a defect in processing of a bag B in the packaging machine 10 and sends the detection results to the processing control unit 30. The type of "a defect of processing " which can be detected by the defect detection unit 31 is not limited. With respect to the packaging machine 10 shown in Fig. 1 described above, for instance, a defect(s) that occurs in one or more of the bag supply process, the printing process, the print inspection process, the mouth opening process, the first content introduction process, the second content introduction process, the steam injection process, the first sealing process, the second sealing process, the cooling process, and the release process, which are mentioned above, may be an object(s) to be detected by the defect detection unit 31. Further, a defect(s) which may occur in connection with any process other than these packaging processes may be an object(s) to be detected by the defect detection unit 31.

Therefore, the defect detection unit 31 may target a single defect or a plurality of types of defects as an object(s) to be detected. To do this, the defect detection unit 31 may include only a single device or may include a plurality of devices.

The imaging unit 32 is provided as a separate unit from the defect detection unit 31, and under the control of the processing control unit 30, takes images of a location that creates the cause of the occurrence of a defect to obtain video data and then stores the video data in the storage unit 33.

The imaging unit 32 is provided to correspond to the defect detection unit 31. Therefore, in a case where a plurality of defect detection units 31 are provided, a plurality of imaging units 32 may be provided in such a manner that video data of a location creating the cause of the occurrence of a defect detected by each defect detection unit 31 is captured by one or more corresponding imaging units 32.

In a case where a plurality of defect detection units 31 are provided, typically, one or more dedicated imaging units 32 are provided for each of the defect detection units 31, but a shared imaging unit 32 may be associated with two or more defect detection units 31. Therefore, such a shared imaging unit 32 may acquire video data of one or more locations which may create the causes of the occurrence of a plurality of types of defects.

The capabilities (e.g., angle of view, etc.) of the imaging unit 32 are not limited, and the frame rate of the video data acquired by the imaging unit 32 is not limited. However, from the viewpoint of properly performing verification to identify the cause of the occurrence of a defect, the video data acquired by the imaging unit 32 preferably has a high frame rate. As an example, the imaging unit 32 can be configured with a high-speed camera, and the video data can have a frame rate of 50 fps (frames per second) or higher, or a frame rate of 100 fps or higher. In particular, from the viewpoint of recording, as video data, information that is equal to or greater than the information that is visible to humans, the imaging unit 32 may capture and acquire video data at 200 fps or higher.

In the storage unit 33, under the control of processing control unit 30, the video data acquired by the imaging unit 32 is stored in association with the occurrence of the corresponding defect. Specifically, the video data is stored in the storage unit 33 along with the time information of the image capture and is associated with the occurrence of a defect by means of said time information. For example, a certain time period from before the timing (date and time) of the occurrence of a defect to after said timing is considered as the "time range related to the occurrence of a defect" and the video data captured during said time range may be considered as the video data related to the cause of the occurrence of a defect.

The method of storing video data in the storage unit 33 is not limited. For example, if the storage unit 33 has sufficient storage capacity, all video data acquired by the imaging unit 32, regardless of whether or not a defect has occurred, may be stored in the storage unit 33. Alternatively, only the video data of the "time range related to the occurrence of a defect" may be stored in the storage unit 33. Alternatively, all of the video data acquired by the imaging units 32 may be temporarily stored in the storage unit 33, and after that, unnecessary video data may be deleted from the storage unit 33 or new video data may be stored in the storage unit 33 so as to overwrite unnecessary video data.

Therefore, the storage unit 33 may store both video data related to bags B in which a defect has occurred during processing and video data related to bags B in which processing has been performed without any defects occurring.

The image analysis unit 34 analyzes, under the control of the processing control unit 30, the video data of the time range related to the occurrence of a defect to identify the cause of the occurrence of the defect. The specific analysis method performed by the image analysis unit 34 is not limited.

For instance, the image analysis unit 34 can compare "the video data related to a bag B in which a defect has occurred during processing" with "the video data related to a bag B in which processing has been performed without any defects occurring" according to any image analysis algorithm to identify the cause of the occurrence of a defect. The image analysis unit 34 may, for example, read and use "the video data related to a bag B in which a defect has occurred during processing" and "the video data related to a bag B in which processing has been performed without any defects occurring" from the storage unit 33.

The notification unit 35 performs, under the control of the processing control unit 30, notification about the cause of the occurrence of a defect identified by analysis of the video data. The specific configuration of the notification unit 35 is not limited, but typically, the notification unit 35 can provide notification of the cause of the occurrence of a defect via a display and an audio device.

The processing control unit 30 controls various devices included in the packaging machine 10. The specific device configuration of the processing control unit 30 is not limited, and the processing control unit 30 may be configured with a single device or may be configured with a combination of a plurality of devices. For example, the processing control unit 30 may separately include: a device (i.e., a packaging processing control unit) which controls the packaging processes performed by the various devices shown in Fig. 1 in conjunction with each other; and a device (i.e., a defect processing control unit) which controls the process of identifying the cause of the occurrence of a defect (e.g., the analysis process performed by the image analysis unit 34).

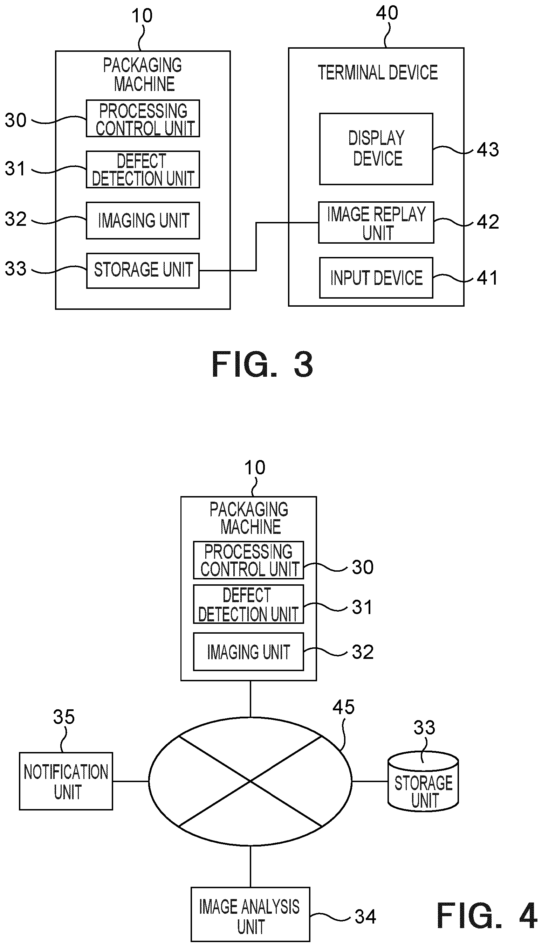

Fig. 3 is a block diagram showing another example of the functional configuration of the packaging machine 10. Among the blocks (the functional configurations) shown in Fig. 3, blocks identical or corresponding to those shown in Fig. 2 described above are marked with the same reference numerals and their detailed descriptions are omitted.

In the packaging machine 10 shown in Fig. 2 described above, the video data is analyzed by the image analysis unit 34 to identify the cause of the occurrence of a defect, but an operation manager may manually analyze the video data.

The packaging machine 10 shown in Fig. 3 includes a processing control unit 30, and a defect detection unit 31, an imaging unit 32 and a storage unit 33 which function under the control of the processing control unit 30. The information (including the video data obtained by the imaging unit 32) stored in the storage unit 33 is read by a terminal device 40 (in particular, an image replay unit 42) which is separately provided from the packaging machine 10. The terminal device 40 may be installed near the packaging machine 10 or far away from the packaging machine 10, and therefore, for instance, the terminal device 40 may not be located in the same room as the packaging machine 10.

The operation manager may operate the image replay unit 42 via an input device 41 to read desired information (including video data) from the storage unit 33 and to display it on a display device 43, so that the operation manager may visually identify the cause of the occurrence of a defect via the display device 43. Typically, the operation manager can visually identify the cause of the occurrence of a defect by slowing, rewinding, and/or fast-forwarding the video data on the display device 43. In particular, in cases of video data having high frame rate, the operation manager can easily and reliably identify the cause of the occurrence of a defect by slow playback.

Fig. 4 is a block diagram showing another example of the functional configuration of the packaging machine 10. Among the blocks (functional configurations) shown in Fig. 4, blocks identical or corresponding to those shown in Figs. 2 and 3 described above are marked with the same reference numerals and their detailed descriptions are omitted.

The packaging machine 10 may be connected to other devices via a network 45 such as the Internet. In the example shown in Fig. 4, a storage unit 33, an image analysis unit 34 and a notification unit 35 are connected, via the network 45, to a packaging machine 10 including a processing control unit 30, a defect detection unit 31 and an imaging unit 32.

For instance, various information including video data acquired by the imaging unit 32 may be sent, under the control of the processing control unit 30, to the storage unit 33 via the network 45 to be stored in the storage unit 33. Further, the image analysis unit 34 may read the information (including video data) stored in the storage unit 33 via the network 45 and analyze it to identify the cause of the occurrence of a defect. Further, the notification unit 35 may receive notification signals from other devices (e.g., the processing control unit 30 and/or the image analysis unit 34) via the network 45 and may perform notification of the identified cause of the occurrence of a defect and of other information.

As described above, the storage unit 33, the image analysis unit 34 and/or the notification unit 35 can be installed separately from the packaging machine 10 (for example, at a location away from the packaging machine 10 (as an example, in a different room from the room where the packaging machine 10 is installed)).

Next, an example of the interrelation between the type of a defect which can be detected by the defect detection unit 31 and the cause of the occurrence of a defect is described.

For example, the defect detection unit 31 can detect the occurrence of a defect in the process of supplying a bag B from the bag feeding device 11 to a gripper pair 82 (i.e., in the bag supply process). For example, a defect may be caused in the bag supply process due to damage to the feed suction cups 11b, to damage or curvature (including bending) of a bag B, and to relative misalignment between a bag B and the feed suction cups 11b. The defect detection unit 31 may include, for example, a pressure gauge which measures changes in the suction pressure (i.e., the vacuum pressure) of the feed suction cups 11b, and such a bag supply process defect can be detected based on the changes in the measurement results of the pressure gauge. Therefore, the imaging unit 32 may take images of the feed suction cups 11b and/or a bag B (e.g., a bag B in the bag feeding device 11 and/or a bag B at the first station S1). In this case, the state of the feed suction cups 11b and/or of a bag B can be checked by analyzing the video data acquired by the imaging unit 32, so that it is possible to determine whether or not the cause of the occurrence of a defect is in the feed suction cups 11b and/or a bag B.

Further, the defect detection unit 31 is capable of detecting the occurrence of a defect related to misalignment of the support position of a bag B in a gripper pair 82. The defect detection unit 31 may include an imaging device and/or a sensor (e.g., an optical sensor) installed at the first station S1 for example and can detect the occurrence of a defect related to the misalignment of the support position of a bag B based on an image(s) captured by the imaging device and/or the detection results of the sensor. Such misalignment of the support position of a bag B can be caused, for example, due to the position of bags B in the bag feeding device 11 (e.g., the position of a bag B immediately before being taken out by the feed suction cups 11b). Therefore, the imaging unit 32 may take images of bags B in the bag feeding device 11 (e.g., of a bag B immediately before being taken out by the feed suction cups 11b). In this case, by analyzing the video data obtained by the imaging unit 32, it is possible to check whether the position and other conditions of bags B in the bag feeding device 11 are appropriate or not, so that it is possible to determine whether or not the cause of the occurrence of a defect is due to the position and other conditions of bags B in the bag feeding device 11.

Further, it is possible for the print inspection device 13 to constitute the defect detection unit 31 to detect the occurrence of a printing defect. Such a printing defect can occur due to misalignment and curvature of a bag B to be printed. Therefore, the imaging unit 32 may take images of a bag B immediately before the bag B undergoes the printing process by the printing device 12 and/or during said printing process. In this case, by analyzing the video data acquired by the imaging unit 32, it is possible to check whether or not the position and other conditions of a bag B to be subjected to the printing process are appropriate, so that it is possible to determine whether the cause of the occurrence of a defect is due to the posture and other conditions of the bag B being gripped by the gripper pair 82.

Further, the defect detection unit 31 is capable of detecting the occurrence of a defect related to the mouth opening process of a bag B. The defect detection unit 31 may include a pressure gauge which measures changes in the suction pressure (i.e., the vacuum pressure) of suction cups included in the mouth opening device 14 and can detect such a mouth opening process defect based on changes in the measurement results of the pressure gauge. Therefore, the imaging unit 32 may take images of the mouth opening device 14 (in particular, the suction cups) and/or of a bag B immediately before undergoing the mouth opening process and/or of a bag B during said mouth opening process. In this case, by analyzing the video data acquired by the imaging unit 32, it is possible to check the conditions of the suction cups of the mouth opening device 14 and/or of the bag B, so that it is possible to determine whether or not the cause of the occurrence of a defect is due to the suction cups of the mouth opening device 14 and/or the bag B.

Further, the defect detection unit 31 is capable of detecting the occurrence of a defect related to a sealing process of a bag B. The defect detection unit 31 can monitor the driving status of a sealing device (i.e., the first sealing device 19 and/or the second sealing device 20) for example, to detect the occurrence of a defect related to the sealing processing of a bag B. Specifically, the defect detection unit 31 may include an imaging device or a sensor which detects and monitors the movement of a hot plate(s) of a sealing device (e.g., the position of the drive shaft which moves the hot plate(s)). If it is determined, according to an image(s) taken by the imaging device or the detection results of the sensor, that the movement of the hot plate(s) (e.g., the position of the drive shaft) when the sealing process of a bag B is performed is out of the proper state, it is possible to determine that a defect occurs in the sealing process of the bag B.

Such a defect related to a sealing process can occur, for example, due to the adhesion of contents to the inner wall surface of the planned sealing section of a bag B. Therefore, the imaging unit 32 may take images of the inner wall surface of the planned sealing section of a bag B immediately before the bag B undergoes a sealing process. In this case, by analyzing the video data acquired by the imaging unit 32, it is possible to check whether or not contents are adhering to the planned sealing section, so that it is possible to determine whether or not the cause of the occurrence of a defect is due to the adhesion of the contents to the planned sealing section of a bag B.

Further, a defect related to a sealing process of a bag B can occur due to the fact that a content is not properly introduced into a bag B. Therefore, the imaging unit 32 may take images of a content introduction device (i.e., the content injection device 17 and/or the steam supply device 18) which introduces a content into a bag B. Further, the imaging unit 32 may take images of the state (e.g., the mouth opening state) of a bag B immediately before a content is introduced into the bag B and/or during a content being introduced into the bag B. In these cases, by analyzing the video data acquired by the imaging unit 32, it is possible to check whether or not the content is introduced into a bag B in an appropriate state, so that it is possible to determine whether or not the cause of the occurrence of a defect is due to the content introduction process.

Next, typical examples of a method of identifying the cause of a defect are described. The methods (each process) described below can be implemented as appropriate, for example, under the control of the processing control unit 30.

### [First example of identifying a defective cause]

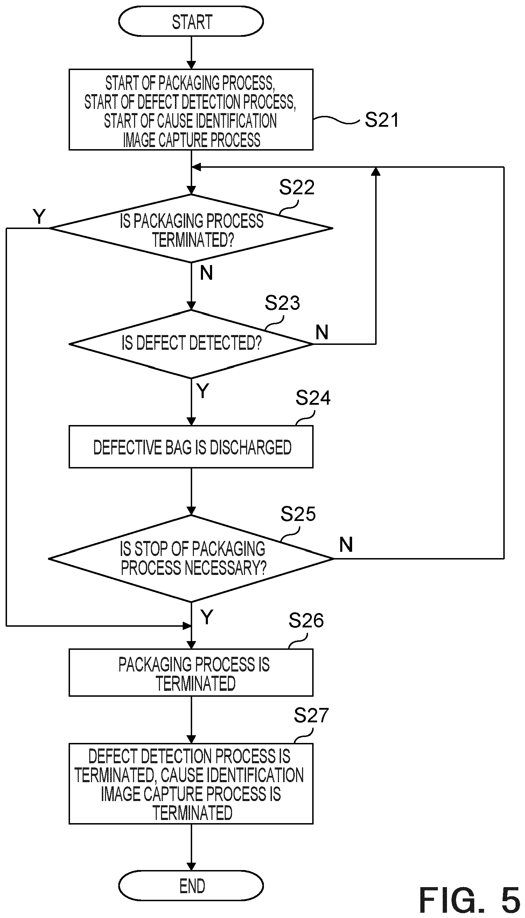

Fig. 5 is a flowchart showing an example of the processing flow in the packaging machine 10.

In the present example, first, the packaging process is started in the packaging machine 10, the defect detection process is started by the defect detection unit 31, and the video data acquisition process (i.e., a cause identification image capture process) to identify the cause of the occurrence of a defect is started by the imaging unit 32 (S21 in Fig. 5). The start of the packaging process, the start of the defect detection process, and the start of the cause identification image capture process may be simultaneously conducted or may be staggered in time between each other.

Then, it is continuously determined whether the packaging process in the packaging machine 10 should be terminated or not (S22). Here, the "criteria for determining whether the packaging process should be terminated" are not limited. Typically, it may be determined whether or not the packaging process in the packaging machine 10 should be terminated, according to whether the planned schedule of the packaging process has been properly completed and whether the operation manager has entered an instruction to terminate the packaging process into the packaging machine 10 via the input device (not shown in the drawings). The determination performed here may be made by the processing control unit 30 for example.

If it is determined that the packaging process should be terminated (Y in S22), then the packaging process is terminated (S26), and the defect detection process and the cause identification image capture process are terminated (S27).

On the other hand, if it is not determined that the packaging process in the packaging machine 10 should be terminated (N in S22), it is determined whether or not a defect has occurred in processing of a bag B according to the detection results of the defect detection unit 31 (S23). The determination performed here may be made by the processing control unit 30 for example.

If it is determined according to the detection results of the defect detection unit 31 that no defect has occurred in processing of a bag B (N in S23), then, unless it is determined that the packaging process should be terminated (see S22), the packaging process, the defect detection process and the cause identification image capture process continue.

On the other hand, if it is determined according to the detection results of the defect detection unit 31 that a defect occurs in processing of a bag B (Y in S23), the bag B for which it is determined that the defect occurs (i.e., a defective bag) is discharged from the packaging machine 10 (S24). The method of discharging a defective bag is not limited, and as described above, the location (for example, the tenth station S10 in Fig. 1) where defective bags B are discharged may be different from the location (for example, the ninth station S9 in Fig. 1) where bags B for which it is not determined that a defect occurs (i.e., normal bags) are discharged.

It is then determined whether or not the packaging process needs to be stopped according to the type and degree of the defect that have occurred (S25). The determination performed here may be made by the processing control unit 30 for example. If it is determined that the packaging process does not need to be stopped (N in S25), then unless it is determined that the packaging process should be terminated (see S22), the packaging process, the defect detection process and the cause identification image capture process continue.

On the other hand, if it is determined that the packaging process needs to be stopped (Y in S25), then the packaging process is terminated (S26), and the defect detection process and the cause identification image capture process are terminated (S27).

As described above, in the example shown in Fig. 5, the continuation and termination of the packaging process, the defect detection process and the cause identification image capture process are determined according to the detection results of the defect detection unit 31 (i.e., based on a defect in processing of a bag B). In this case, it is possible to analyze the video data to identify the cause of the occurrence of a defect, irrespective of the determination of whether the packaging process, the defect detection process and the cause identification image capture process should be continued or terminated. Therefore, the process of identifying the cause of the occurrence of a defect may be performed during the packaging process, the defect detection process and the cause identification image capture process being performed or may be performed after the packaging process, the defect detection process and the cause identification image capture process come to an end.

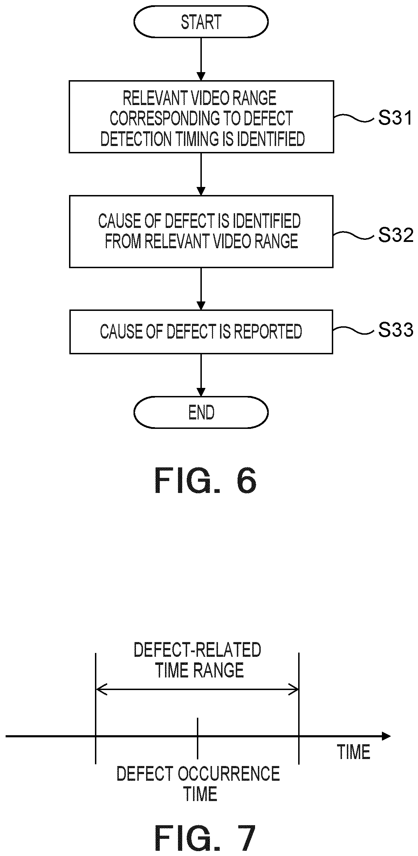

Fig. 6 is a flowchart showing an example of the processing flow for identifying the cause of the occurrence of a defect. Fig. 7 shows an example of the relation between a defect occurrence time and a defect-related time range. Part or all of the process of identifying the cause of the occurrence of a defect shown in Fig. 6 may be performed mechanically by a device (e.g., the image analysis unit 34 (see Fig. 2, etc.)) or may be performed manually by the operation manager.

In the example shown in Fig. 6, first, a relevant video range corresponding to a defect detection timing is identified (S31 in Fig. 6). The "relevant video range" here is video data in a range of the video data acquired by the imaging unit 32 which is presumed to include the data in which the cause of the occurrence of a defect detected by the defect detection unit 31 is captured. Typically, as shown in Fig. 7, the video data in a time range (i.e., in a defect-related time range) defined based on the timing at which a defect is detected by the defect detection unit 31 (i.e., based on a defect occurrence date and time (a defect occurrence time)) may be used as the relevant video range. In the defect-related time range that defines the relevant video range, the time range before the defect occurrence time and the time range after the defect occurrence time can be variably defined according to the cause of the occurrence of a defect.

Then, the cause of the occurrence of a defect is identified by analyzing the video data of the relevant video range (S32).

The cause of a defect identified in this manner is reported through the notification unit 35 (S33).

### [Second example of identifying a defective cause]

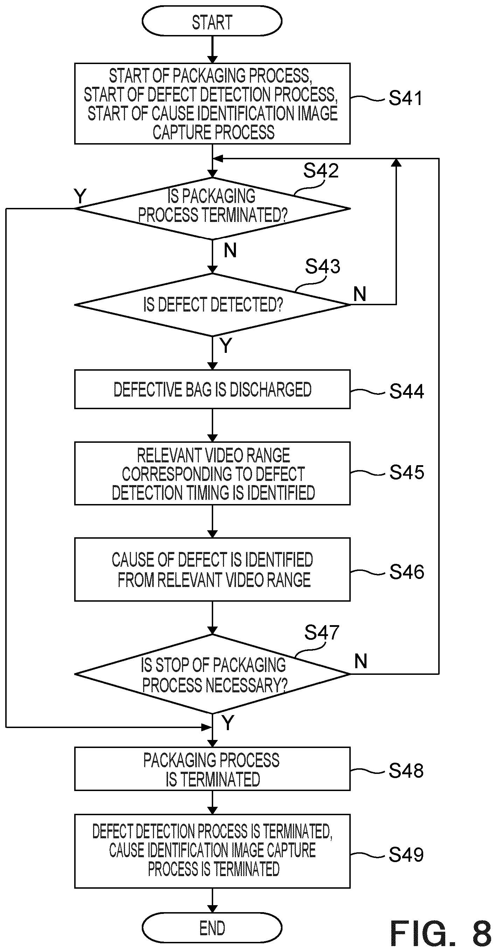

Fig. 8 is a flowchart showing another example of the processing flow in the packaging machine 10. In the present example, detailed explanations are omitted for the processes which are the same as or similar to those in the first example of identifying a defective cause described above.

In the present example, the need to continue or terminate the packaging process, the defect detection process and cause identification image capture process is determined according to the cause of a defect.

Specifically, after the packaging process, the defect detection process and the cause identification image capture process are started (S41 in Fig. 8), the determination of whether or not the packaging process should be terminated is continuously made (S42), and if it is determined that the packaging process should be terminated (Y in S42), the packaging process is terminated (S48), and the defect detection process and the cause identification image capture process are terminated (S49).

On the other hand, if it is not determined that the packaging process should be terminated (N in S42), it is determined whether a defect in processing of a bag B occurs or not according to the detection results of the defect detection unit 31 (S43). If it is determined that no defect in processing of a bag B occurs (N in S43), then the packaging process, the defect detection process and the cause identification image capture process continue.

On the other hand, if it is determined that there is a defect in processing of a bag B (Y in S43), then the defective bag is discharged (S44), a relevant video range corresponding to the defect detection timing is identified (S45), and the cause of the defect is identified from the relevant video range (S46). Then, it is determined whether the packaging process needs to be stopped or not according to the identified cause of the defect (S47). The determination performed here may be made by the processing control unit 30 for example. If it is not determined that the packaging process needs to be stopped (N in S47), then the packaging process, the defect detection process and the cause identification image capture process continue.

On the other hand, if it is determined that the packaging process needs to be stopped (Y in S47), the packaging process is terminated (S48), and the defect detection process and the cause identification image capture process are terminated (S49).

### [Third example of identifying a defective cause]

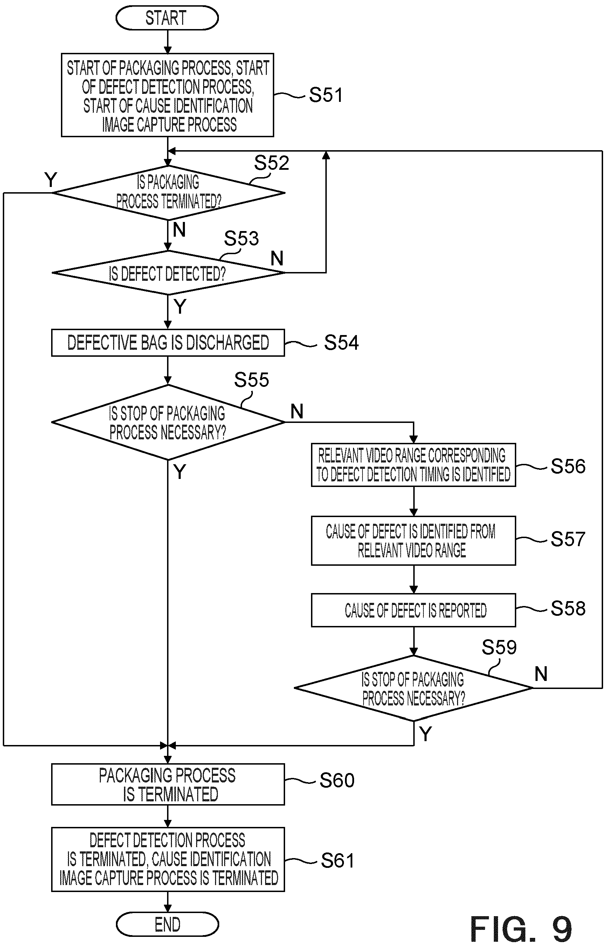

Fig. 9 is a flowchart showing another example of the processing flow in the packaging machine 10. In the present example, detailed explanations are omitted for the processes which are the same as or similar to those in the first and second examples of identifying a defective cause described above.

In the present example, the need to continue or terminate the packaging process, the defect detection process and the cause identification image capture process is determined based on both the "type and degree of a defect occurring" and the "cause of a defect".

Specifically, after the packaging process, the defect detection process and the cause identification image capture process are started (S51 in Fig. 9), the determination of whether or not the packaging process should be terminated is continuously made (S52), and if it is determined that the packaging process should be terminated (Y in S52), the packaging process is terminated (S60), and the defect detection process and the cause identification image capture process are terminated (S61).

On the other hand, if it is not determined that the packaging process should be terminated (N in S52), it is determined whether a defect in processing of a bag B occurs or not according to the detection results of the defect detection unit 31 (S53). If it is determined that no defect in processing of a bag B occurs (N in S53), then the packaging process, the defect detection process and the cause identification image capture process continue.

On the other hand, if it is determined that a defect occurs in processing of a bag B (Y in S53), the defective bag is discharged (S54), and it is determined whether or not the packaging process needs to be stopped according to the type and degree of the defect occurring (S55). Here, if it is determined that the packaging process needs to be stopped (Y in S55), the packaging process is terminated (S60), and the defect detection process and the cause identification image capture process are terminated (S61).

On the other hand, if it is determined that the packaging process does not need to be stopped according to the type and degree of a defect occurring (N in S55), a relevant video range corresponding to the defect detection timing is identified (S56), the cause of the defect is identified from the relevant video range (S57), and the identified cause of the defect is reported (S58). Then, it is determined whether the packaging process needs to be stopped or not according to the identified cause of the defect (S59). Here, if it is not determined that the packaging process needs to be stopped (N in S59), then the packaging process, the defect detection process and the cause identification image capture process continue.

On the other hand, if it is determined that the packaging process needs to be stopped according to the cause of the defect (Y in S59), the packaging process is terminated (S60), and the defect detection process and the cause identification image capture process are terminated (S61).

As described above, the above-mentioned packaging machine 10 comprises: the defect detection unit 31 which detects occurrence of a defect in processing of a bag B; and an imaging unit 32 which is provided separately from the defect detection unit 31, takes images of a part creating a cause of occurrence of a defect to acquire video data, wherein the video data is stored in association with the occurrence of the defect.

According to the packaging machine 10, by analyzing the video data stored in association with the occurrence of a defect, the cause of the occurrence of the defect can be easily identified. In particular, it is not necessary to operate the packaging machine 10 at a low speed in order to check the cause of the occurrence of a defect, and the status of the packaging machine 10 operating at normal operating speed can be checked from the video data; therefore, the cause of the occurrence of a defect can be identified with high reliability. Further, since the imaging unit 32 records the movement of the packaging machine 10 as video data, there is no need for the operation manager to approach the various devices of the packaging machine 10 in order to check the movement of the packaging machine 10. Therefore, the operation manager can check and identify the cause of a defect at a distance from the packaging machine 10. The operation manager can also check and identify the cause of the occurrence of a defect after the normal operation of the packaging machine 10 comes to an end.

Further, the video data is stored together with time information of the image capture and is thus associated with the occurrence of a defect via the time information.

This makes it possible to easily identify a data range in the video data which is related to the occurrence of a defect and to simplify the process required to check and identify the cause of the occurrence of a defect.

Further, the image analysis unit 34 analyzes the video data in the time range related to the occurrence of a defect to identify the cause of the occurrence of the defect.

This allows for stable and accurate processing to check and identify the cause of the occurrence of a defect, and automation of such processing can also be achieved.

Further, the video data has a frame rate of 50 fps or higher.

This makes it possible to properly record in video data the cause of the occurrence of a defect, so that the operation manager can properly visually confirm the cause of the occurrence of a defect when the video data is played back slowly for example.

Further, a plurality of defect detection units 31 are provided, a plurality of imaging units 32 are provided, and video data of a location which creates the cause of the occurrence of a defect detected by each defect detection unit 31 is acquired by one or more corresponding imaging units 32.

This makes it possible to properly identify the causes of the occurrence of a plurality of types of defects.

Further, the storage unit 33 is provided in which video data is stored in association with the occurrence of a defect, and video data relating to a bag B in which a defect occurs in processing and video data relating to a bag B for which processing has been performed without a defect occurring are stored in the storage unit 33.

This makes it possible to easily compare the video data relating to a bag B in which a defect occurs in processing with the video data relating to a bag B for which processing has been performed without a defect occurring, so that it is possible to identify the cause of the occurrence of a defect easily and reliably.

Further, the image analysis unit 34 compares the video data relating to a bag B in which a defect occurs in processing with the video data relating to a bag B for which processing has been performed without a defect occurring, to identify the cause of the occurrence of a defect.

This makes it possible to perform stable and accurate processing for checking and identifying the cause of the occurrence of a defect.

Further, the notification unit 35 which performs notification of the cause of the occurrence of a defect identified by analysis of the video data is provided.

This makes it possible for the operation manager and other humans to easily recognize the cause of the occurrence of a defect.

The present disclosure is not limited to the embodiments and variations described above.

In the examples described above, the video data is stored in storage unit 33 along with the time information of the image capture in such a manner that the video data is stored in association with the occurrence of a defect, but the manner for storing the video data is not limited to this. For instance, the video data (in particular, video data in a time range related to the occurrence of a defect) may be stored in the storage unit 33 along with a defect information indicating a corresponding defect in such a manner that the video data is stored in association with the occurrence of the defect.

Various modifications may be added to each element of the above-described embodiments and variations, and configurations may be partially or entirely combined among the above embodiments and variations. Further, the effects produced by the present disclosure are also not limited to the effects described above, and effects specific to the concrete configuration of each embodiment may also be produced. As described above, various additions, changes, and partial deletions may be made to each element described in the claims, description, and drawings to the extent that they do not depart from the scope of the invention as defined in the appended claims.

## Claims

1. A bag processing apparatus (10) comprising:
a defect detection unit (13) adapted to detect occurrence of a defect in processing of a bag (B); and
an imaging unit (32) which is separately provided from the defect detection unit (13) and is adapted to take images of a location creating a cause of occurrence of the defect and to acquire video data, the video data being stored in association with the occurrence of the defect.

2. The bag processing apparatus (10) as defined in claim 1, wherein the video data is stored together with time information of image-taking in such a manner that the video data is associated with the occurrence of the defect by the time information.

3. The bag processing apparatus (10) as defined in claim 1 or 2 comprising an image analysis unit (34) adapted to analyze the video data in a time range related to the occurrence of the defect, to identify the cause of the occurrence of the defect.

4. The bag processing apparatus (10) as defined in any one of claims 1 to 3, wherein the video data has a frame rate of 50 fps or higher.

5. The bag processing apparatus (10) as defined in any one of claims 1 to 4, wherein:
a plurality of defect detection units (13) are provided,
a plurality of imaging units (32) are provided, and
the video data of a location creating a cause of the occurrence of the defect detected by each of the plurality of defect detection units (13) is acquired by one or more corresponding imaging units (32).

6. The bag processing apparatus (10) as defined in any one of claims 1 to 5, comprising a storage unit (33) in which the vide data is stored in association with the occurrence of the defect,
wherein the video data related to a bag (B) in which the defect has occurred in the processing and the video data related to a bag (B) of which the processing has been performed without occurrence of the defect are stored in the storage unit (33).

7. The bag processing apparatus (10) as defined in claim 6 citing claim 3, wherein the image analysis unit (34) is adapted to compare the video data related to a bag (B) in which the defect has occurred in the processing, with the video data related to a bag (B) of which the processing has been performed without occurrence of the defect, to identify the cause of the occurrence of the defect.

8. The bag processing apparatus (10) as defined in any one of claims 1 to 7, comprising a notification unit (35) adapted to perform notification of the cause of the occurrence of the defect identified as a result of analysis of the video data.

## Patentansprüche

1. Eine Beutelverarbeitungsvorrichtung (10) umfassend:
eine Defekterkennungseinheit (13), die dazu geeignet ist, das Auftreten eines Defekts bei der Verarbeitung eines Beutels (B) zu erkennen; und
eine Bildgebungseinheit (32), die getrennt von der Defekterkennungseinheit (13) angeordnet ist und dazu geeignet ist, Bilder einer Stelle aufzunehmen, die eine Ursache für das Auftreten des Defekts darstellt, und Videodaten zu erfassen, wobei die Videodaten in Verbindung mit dem Auftreten des Defekts gespeichert werden.

2. Die Beutelverarbeitungsvorrichtung (10) gemäß Anspruch 1, wobei
die Videodaten werden zusammen mit einer Zeitinformation der Bildaufnahme derart gespeichert, dass die Videodaten durch die Zeitinformation dem Auftreten des Defekts zugeordnet werden.

3. Die Beutelverarbeitungsvorrichtung (10) gemäß Anspruch 1 oder 2 umfassend
eine Bildanalyseeinheit (34), die dazu geeignet ist, die Videodaten in einem Zeitbereich zu analysieren, der mit dem Auftreten des Defekts in Zusammenhang steht, um die Ursache für das Auftreten des Defekts zu identifizieren.

4. Die Beutelverarbeitungsvorrichtung (10) gemäß einem der Ansprüche 1 bis 3, wobei die Videodaten eine Bildrate von 50 fps oder mehr aufweisen.

5. Die Beutelverarbeitungsvorrichtung (10) gemäß einem der Ansprüche 1 bis 4, wobei:
eine Vielzahl von Defekterkennungseinheiten (13) angeordnet ist,
eine Vielzahl von Bildgebungseinheiten (32) angeordnet ist, und
die Videodaten eines Ortes, der eine Ursache für das Auftreten des von jeder der Vielzahl von Defekterkennungseinheiten (13) erkannten Defekts darstellt, von einer oder mehreren entsprechenden Bildgebungseinheiten (32) erfasst werden.

6. Die Beutelverarbeitungsvorrichtung (10) gemäß einem der Ansprüche 1 bis 5, umfassend
eine Speichereinheit (33), in der die Videodaten in Verbindung mit dem Auftreten des Defekts gespeichert sind, wobei
die Videodaten in Bezug auf einen Beutel (B), bei dem der Defekt bei der Verarbeitung aufgetreten ist, und die Videodaten in Bezug auf einen Beutel (B), bei dem die Verarbeitung ohne Auftreten des Defekts durchgeführt wurde, in der Speichereinheit (33) gespeichert sind.

7. Die Beutelverarbeitungsvorrichtung (10) gemäß Anspruch 6 unter Bezugnahme auf Anspruch 3, wobei
die Bildanalyseeinheit (34) angepasst ist, um die Videodaten in Bezug auf einen Beutel (B), bei dem der Defekt bei der Verarbeitung aufgetreten ist, mit den Videodaten in Bezug auf einen Beutel (B) zu vergleichen, bei dem die Verarbeitung ohne Auftreten des Defekts durchgeführt wurde, um die Ursache für das Auftreten des Defekts zu identifizieren.

8. Die Beutelverarbeitungsvorrichtung (10) gemäß einem der Ansprüche 1 bis 7, umfassend
eine Meldeeinheit (35), die dazu ausgebildet ist, eine Meldung über die Ursache des Auftretens des Defekts vorzunehmen, der als Ergebnis der Analyse der Videodaten identifiziert wurde.

## Revendications

1. Appareil de traitement de sacs (10) comprenant :
une unité de détection de défaut (13) adaptée pour détecter une occurrence d'un défaut dans un traitement d'un sac (B) ; et
une unité d'imagerie (32) qui est fournie séparément de l'unité de détection de défaut (13) et est adaptée pour prendre des images d'un emplacement créant une cause d'une occurrence du défaut et pour acquérir des données de vidéo, les données de vidéo étant stockées en association avec l'occurrence du défaut.

2. L'appareil de traitement de sacs (10) tel que défini à la revendication 1,
dans lequel les données de vidéo sont stockées conjointement avec des informations temporelles de prise d'image de telle manière que les données de vidéo soient associées à l'occurrence du défaut par les informations temporelles.

3. L'appareil de traitement de sacs (10) tel que défini à la revendication 1 ou 2 comprenant une unité d'analyse d'image (34) adaptée pour analyser les données de vidéo dans une plage temporelle liée à l'occurrence du défaut, pour identifier la cause de l'occurrence du défaut.

4. L'appareil de traitement de sacs (10) tel que défini à l'une quelconque des revendications 1 à 3, dans lequel les données de vidéo présentent un débit de trames de 50 fps ou supérieur.

5. L'appareil de traitement de sacs (10) tel que défini à l'une quelconque des revendications 1 à 4, dans lequel :
une pluralité d'unités de détection de défaut (13) est fournie,
une pluralité d'unités d'imagerie (32) est fournie, et
les données de vidéo d'un emplacement créant une cause de l'occurrence du défaut détectée par chacune de la pluralité d'unités de détection de défaut (13) sont acquises par une ou plusieurs des unités d'imagerie correspondantes (32).

6. L'appareil de traitement de sacs (10) tel que défini à l'une quelconque des revendications 1 à 5, comprenant une unité de stockage (33) dans laquelle les données de vidéo sont stockées conjointement avec l'occurrence du défaut,
dans lequel les données de vidéo liées à un sac (B) sur lequel le défaut s'est produit dans le cadre du traitement et les données de vidéo liées à un sac (B) dont le traitement a été exécuté sans occurrence du défaut sont stockées dans l'unité de stockage (33).

7. L'appareil de traitement de sacs (10) tel que défini à la revendication 6 mentionnant la revendication 3, dans lequel l'unité d'analyse d'image (34) est adaptée pour comparer les données de vidéo liées à un sac (B) sur lequel le défaut s'est produit dans le cadre du traitement, aux données de vidéo liées à un sac (B) dont le traitement a été exécuté sans occurrence du défaut, pour identifier la cause de l'occurrence du défaut.

8. L'appareil de traitement de sacs (10) tel que défini à l'une quelconque des revendications 1 à 7, comprenant une unité de notification (35) adaptée pour exécuter une notification de la cause de l'occurrence du défaut identifiée en tant que résultat d'analyse des données de vidéo.
